# DEMANDE DE BREVET EUROPEEN

(11) **EP 4 435 651 A1**
(43) Date de publication de la demande: **25.09.2024**
(21) Numéro de dépôt: 24162864.3
(22) Date de dépôt: 12.03.2024
(51) Int. Cl.: G06F 21/57, G06F 21/78

(54) **IDENTIFICATION D'UNE APPLICATION**

(30) Priorité: 23.03.2023 FR 2302751
(71) Demandeur: STMicroelectronics International N.V., 1228 Plan-les-Ouates, Geneva (CH)
(72) Inventeur: JAOUEN, Michel, 72530 YVRE L'EVEQUE (FR)
(74) Mandataire: Cabinet Beaumont

(57) **Abrégé**

La présente description concerne un système (200) comprenant au moins une première application (202) et une plateforme (201) logicielle partagée, dans lequel chaque application (202) est identifiée par ladite plateforme (201) logicielle par un premier nombre aléatoire, ledit premier nombre aléatoire étant stocké de manière chiffrée dans un code d'exécution de ladite première application (202), et un deuxième nombre représentatif dudit premier nombre aléatoire étant stocké dans une première partie d'une mémoire uniquement accessible à ladite plateforme (201).

## Description

### Domaine technique

La présente description concerne de façon générale les systèmes et dispositifs électroniques, et la sécurité de tels systèmes et dispositifs électroniques. La présente description se rapporte plus particulièrement à la protection de données, ou ressources numériques, utilisées par une application mise en oeuvre par un système ou dispositif électronique.

### Technique antérieure

Il est courant de nos jours, d'utiliser des dispositifs et systèmes électroniques adaptées à exécuter plusieurs fonctionnalités différentes, elles-mêmes mises en oeuvre par des applications logicielles.

Il serait souhaitable de pouvoir améliorer, au moins en partie, certains aspects des systèmes et architectures logicielles. Plus particulièrement, il serait souhaitable de pouvoir améliorer, au moins en partie, certains aspects de la sécurisation des applications logicielles.

### Résumé de l'invention

Il existe un besoin pour des dispositifs et systèmes électroniques adaptés à mettre en oeuvre plusieurs applications logicielles de manière sécurisée.

Un mode de réalisation pallie tout ou partie des inconvénients des systèmes électroniques connus adaptés à mettre en oeuvre une ou plusieurs applications logicielles.

Un mode de réalisation pallie tout ou partie des inconvénients des procédés de stockage, et de récupération, des ressources numériques d'une applications logicielle.

Un mode de réalisation prévoit un système électronique dans lequel des applications sont identifiés de manière fiable auprès d'une plateforme logicielle partagée.

Un mode de réalisation prévoit un procédé d'initialisation d'un tel système.

Un mode de réalisation prévoit des procédés de stockage et de récupération de ressources numériques en mémoire d'un système.

Un mode de réalisation prévoit un système comprenant au moins une première application et une plateforme logicielle partagée, dans lequel chaque application est identifiée par ladite plateforme logicielle par un premier nombre aléatoire, ledit premier nombre aléatoire étant stocké de manière chiffrée dans un code d'exécution de ladite première application, et un deuxième nombre représentatif dudit premier nombre aléatoire étant stocké dans une première partie d'une mémoire uniquement accessible à ladite plateforme.

Selon un mode de réalisation, ledit deuxième nombre représentatif dudit premier nombre aléatoire est généré par ladite plateforme logicielle.

Selon un mode de réalisation, ledit premier nombre aléatoire est généré par un premier fabricant d'équipement d'origine de ladite première application.

Selon un mode de réalisation, ledit premier nombre aléatoire est modifié lors d'une mise-à-jour de ladite première application.

Selon un mode de réalisation, ledit code d'exécution de ladite première application est stocké dans une deuxième partie d'une mémoire qui n'est pas accessible à un deuxième fabricant d'équipement d'origine d'une deuxième application mise en oeuvre par ladite plateforme.

Selon un mode de réalisation, le système est un système d'exploitation sécurisé embarqué dans un élément sécurisé.

Un autre mode de réalisation prévoit un procédé d'initialisation d'un système décrit précédemment comprenant les étapes successives suivantes :
- envoyer, par ladite première application, ledit code d'exécution chiffré à ladite plateforme ;
- extraire, par ladite plateforme, ledit premier nombre aléatoire ;
- générer, par ladite plateforme, ledit deuxième nombre ; et
- stocker ledit deuxième nombre.

Selon un mode de réalisation, le procédé comprend, en outre, les étapes successives suivantes :
- déchiffrer, par ladite plateforme, ledit code d'exécution chiffré avec une première clé de déchiffrement ; et
- stocker ledit code d'exécution déchiffré.

Selon un mode de réalisation, ledit code d'exécution déchiffré est stocké dans ladite deuxième partie de mémoire.

Selon un mode de réalisation, ladite clé n'est pas connue dudit deuxième fabricant d'équipement d'origine.

Un autre mode de réalisation prévoit un procédé de stockage d'au moins une première ressource numérique de ladite première application du système décrit précédemment, dans lequel ladite plateforme stocke ladite au moins une ressource numérique et l'associe audit deuxième nombre.

Selon un mode de réalisation, la plateforme utilise ledit deuxième nombre pour signer et/ou chiffrer ladite au moins une première ressource numérique.

Selon un mode de réalisation, ladite au moins une première ressource numérique est stockée dans une troisième partie d'une mémoire.

Un autre mode de réalisation prévoit un procédé de récupération d'au moins une deuxième ressource numérique associé à un troisième nombre par une troisième application identifiée par un quatrième nombre aléatoire, mis en oeuvre par le système décrit précédemment, dans lequel ladite plateforme vérifie la concordance desdits troisième et quatrième nombres.

Selon un mode de réalisation, si la concordance est vérifiée, ladite au moins une deuxième ressource est transmise à ladite troisième application par ladite plateforme.

Selon un mode de réalisation, si la concordance n'est pas vérifiée, une erreur est transmise à ladite troisième application par ladite plateforme.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, très schématiquement et sous forme de blocs, un exemple de dispositif électronique auquel peuvent s'appliquer les modes de réalisation des figures 2 à 4 ;

la figure 2 représente, très schématiquement et sous forme de blocs, un mode de réalisation d'un système électronique ;

la figure 3 représente un schéma-bloc illustrant un mode de mise en oeuvre d'un procédé d'initialisation du système de la figure 2 ; et

la figure 4 représente un premier schéma-bloc illustrant un mode de mise en oeuvre d'un procédé de stockage d'une ressource numérique, et un deuxième schéma-bloc illustrant un mode de mise en oeuvre d'un procédé de récupération d'une ressource numérique.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après se rapportent à la sécurisation d'applications logicielles, et plus particulièrement à la sécurisation de ressources numériques de telles applications logicielles. Il s'agit plus précisément d'éviter à une application logicielle l'accès à des ressources numériques qui ne lui sont pas destinées, comme des ressources numériques d'une autre application logicielle, ou des ressources numériques d'une ancienne version d'une même application logicielle. Les modes de réalisation décrits ci-après permettent, en particulier, de pallier une attaque par substitution d'applications, dans laquelle une application pirate prend la place d'une application déjà installée en se faisant passer pour elle lors d'une mise à jour, dans le but d'avoir accès à des ressources numériques de l'application.

Les modes de réalisation décrits ci-après concernent, plus particulièrement, un système comprenant une plateforme logicielle adaptée à mettre en oeuvre une ou plusieurs applications logicielles. Chaque application logicielle est identifiée auprès de la plateforme par l'intermédiaire d'un nombre aléatoire, qu'elle stocke de manière chiffrée, par exemple, dans son code d'exécution ou dans un élément séparé de son code d'exécution pour faciliter sa protection et son utilisation.

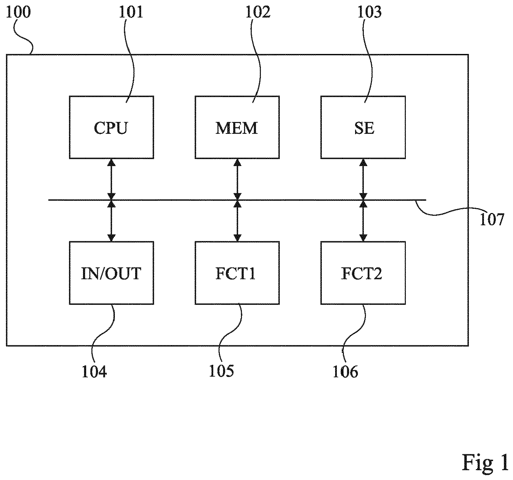

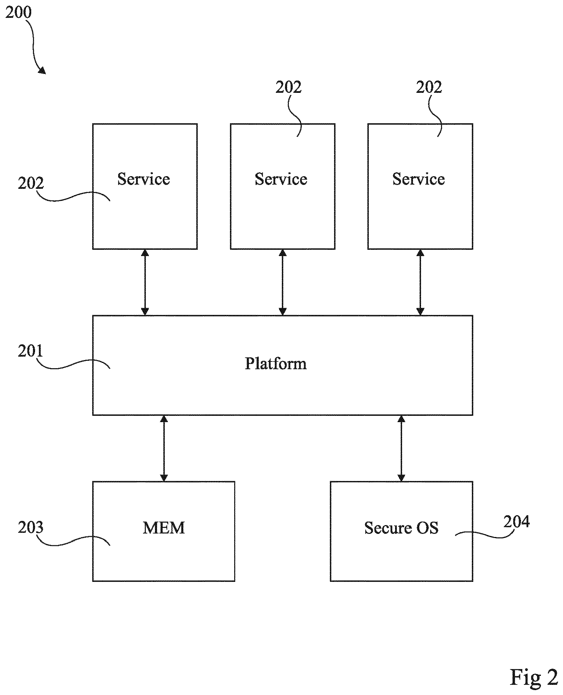

La figure 1 est un schéma bloc représentant, très schématiquement, une architecture d'un exemple d'un dispositif électronique 100 adapté à mettre en oeuvre les modes de réalisation décrits en relation avec les figures 2 à 4.

Le dispositif électronique 100 comprend un processeur 101 (CPU) adapté à mettre en oeuvre différents traitements de données stockées dans des mémoires et/ou fournies par d'autres circuits du dispositif 100. Le processeur 101 peut, en outre, être adapté à mettre en oeuvre une architecture logicielle du type de l'architecture logicielle décrite en relation avec la figure 2.

Le dispositif électronique 100 comprend, en outre, différents types de mémoires 102 (MEM), parmi lesquelles, par exemple, une mémoire non volatile, une mémoire volatile, et/ou une mémoire morte. Chaque mémoire 102 peut être adaptée à stocker différents types de données, et peut comprendre des règles d'accès. En particulier, la ou les mémoires 102 peuvent comprendre des parties qui ne sont accessibles qu'à un ou plusieurs circuits du dispositif électronique, et/ou qu'à un ou plusieurs programmes logiciels mis en oeuvre par le dispositif 100.

Le dispositif électronique 100 comprend, en outre, par exemple, un élément sécurisé 103 (SE) adapté à traiter des données sensibles et/ou secrètes. L'élément sécurisé 103 peut comprendre son ou ses propres processeurs, son ou ses propres mémoires, etc. L'élément sécurisé 103 peut, en outre, être adapté à mettre en oeuvre une architecture logicielle du type de l'architecture logicielle décrite en relation avec la figure 2.

On appelle, dans la suite de la description, données sensibles et données secrètes des données dont le contenu n'est pas destiné à être public, et, donc, dont l'accès est restreint à certaines personnes et/ou circuits particuliers.

Le dispositif électronique 100 peut comprendre, en outre, des circuits d'interface 104 (IN/OUT) adaptés à envoyer et/ou à recevoir des données provenant de l'extérieur du dispositif 100. Les circuits d'interface 104 peuvent être, en outre adaptés à mettre en oeuvre un système d'affichage de données, par exemple, un écran.

Le dispositif électronique 100 comprend, en outre, différents circuits 105 (FCT1) et 106 (FCT2) adaptés à réaliser différentes fonctions. A titre d'exemple, les circuits 105 peuvent comprendre des circuits de mesure, des circuits de conversion de données, des circuits de commande d'équipement électronique ou électromécanique, etc.

Le dispositif électronique 100 comprend, en outre, un ou plusieurs bus de données 107 adaptés à transférer des données entre ses différents composants.

La figure 2 représente, très schématiquement et sous forme de blocs, un mode de réalisation d'une architecture logicielle, ou système logiciel 200.

L'architecture, ou système, 200 comprend :
- une plateforme logicielle partagée et sécurisée 201 (Platform) ;
- une ou plusieurs applications logicielles sécurisées 202 (Service) ;
- un ou plusieurs mémoires 203 (MEM) ; et
- au moins un système d'exploitation sécurisé 204 (Secure OS) .

La plateforme logicielle partagée 201 est un logiciel utilisé pour mettre en oeuvre la ou les applications 202. Plus particulièrement, la plateforme 201 est adaptée à communiquer avec les applications, et, plus particulièrement, à recevoir et leur transmettre des données. Selon un mode de réalisation, la plateforme 201 est adaptée à gérer le stockage des données utilisées par la ou les applications logicielles 202. Selon un exemple, la plateforme logicielle 201 est conçue par un fabricant d'équipement d'origine (OEM, Original Equipment Manufacturer), ou fabricant, différent du dispositif électronique, comme le processeur ou l'élément sécurisé, la mettant en oeuvre.

On appelle ici fabricant d'équipement d'origine, ou simplement fabricant, le concepteur initial d'un élément, comme un circuit, un dispositif ou un logiciel.

La ou les applications logicielles sécurisées 202 (Service) sont des logiciels sécurisés adaptés à mettre en oeuvre une ou plusieurs fonctionnalités. Une application 202 peut aussi être appelée service logiciel, ou simplement service. Selon un mode de réalisation, une application 202 est mise en oeuvre à partir de son code d'exécution, et peut utiliser des ressources numériques (Assets).

On appelle ici code d'exécution l'ensemble de données et instructions formant le ou les programmes mis en oeuvre par une application. Quand une application est mise à jour, son code d'exécution est modifié. Sans code d'exécution une application 202 ne peut fonctionner.

De plus, on appelle ici ressource numérique une ou plusieurs données utilisées pendant et par une application pour son fonctionnement. Ces données peuvent être récoltées, générées, et/ou traitées par ladite application. Une ressource numérique peut être une donnée stockée temporairement par l'application, ou stockée manière plus durable par l'application. Une application 202 n'a pas nécessairement besoin de ressource numérique pour fonctionner. Quand une application est mise à jour, les ressources numériques ne sont pas modifiées. Une ressource numérique est généralement considérée comme une donnée sensible et/ou secrète.

Selon un mode de réalisation, chaque application logicielle 202 peut être conçue par un fabricant différent du fabricant de la plateforme logicielle 201 et du fabricant du dispositif électronique, comme le processeur ou l'élément sécurisé les mettant en oeuvre. De même, différentes applications peuvent avoir des fabricants différents.

Chaque application 202 est adaptée à communiquer avec la plateforme 201, et, plus généralement, est adaptée à être mise en oeuvre ou exécutée par la plateforme 201.

La ou les mémoires 203 représentent les accès à la ou les différentes mémoires du dispositif mettant en oeuvre le système 200. Parmi ces mémoires, il existe au moins une partie d'une mémoire dont l'accès est strictement réservé à la plateforme 201, et au moins une partie d'une mémoire servant au stockage des ressources numériques des applications 202. C'est la plateforme 201 qui est adaptée à gérer les accès en mémoire. Les applications 202 n'ont pas accès directement aux mémoires 203.

Le système d'exploitation sécurisé 204 est, par exemple, le système d'exploitation du dispositif électronique, comme un processeur ou un élément sécurisé, mettant en oeuvre le système 200. Le système d'exploitation 204 est adapté à communiquer avec la plateforme 201, mais aussi, selon un exemple non représenté, avec les mémoires 203 et les applications 202.

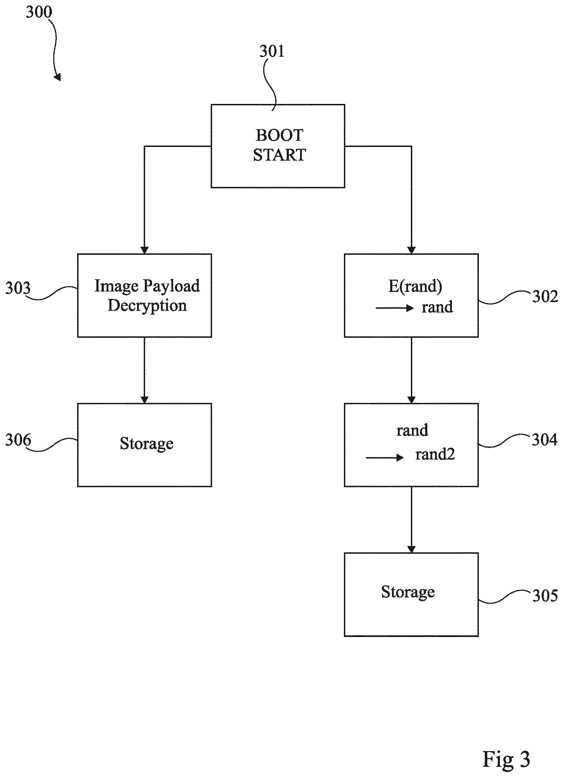

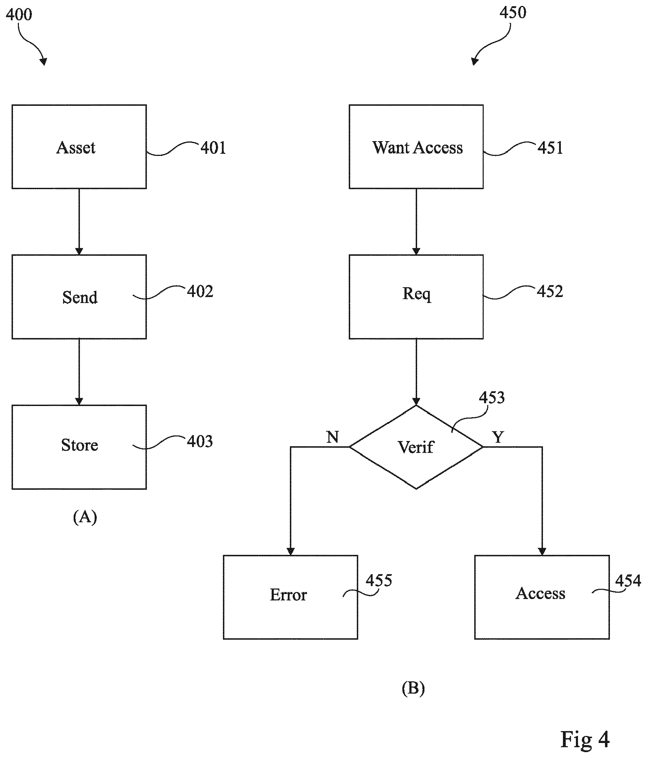

Selon un mode de réalisation, chaque application 202 est adaptée à être identifiée auprès de la plateforme 201 par l'intermédiaire d'un nombre aléatoire Rand. Ce nombre aléatoire Rand est stocké de façon chiffrée dans, par exemple, le code d'exécution de chaque application, ou dans un élément séparé de son code d'exécution pour faciliter sa protection et son utilisation. Selon un exemple, ce nombre aléatoire Rand est généré par le fabricant de l'application 202. L'utilisation de ce nombre aléatoire est décrit en relation avec les modes de mise en oeuvre des procédés décrits en relation avec les figures 3 et 4.

La figure 3 est un schéma bloc illustrant un mode de mise en oeuvre d'un procédé d'initialisation 300 d'un dispositif électronique du type du dispositif électronique 100 décrit en relation avec la figure 1 mettant en oeuvre un système, ou architecture, du type du système 200 décrit en relation avec la figure 2.

Le procédé d'initialisation 300, ou procédé de boot, est le procédé de démarrage du dispositif et du système. Ce procédé est nécessairement mis en oeuvre avant n'importe quelle mise en oeuvre d'une application du système.

A une étape 301 (BOOT START), le dispositif et le système démarrent. Chaque application présente son code d'exécution à la plateforme logicielle partagée. Selon un mode de réalisation, le code d'exécution de chaque application est chiffré. L'étape 301 est suivie par deux étapes 302 (E(rand)-> rand) et 303 (Image Payload Decryption).

A l'étape 302, le nombre aléatoire Rand permettant l'identification de l'application est extrait du code d'exécution de l'application par la plateforme. Selon un mode de réalisation, le nombre aléatoire Rand est chiffré comme le code d'exécution de l'application. La plateforme est adaptée à déchiffrer le nombre aléatoire.

A une étape 304 (rand -> rand2), successive à l'étape 302, la plateforme peut, selon un exemple, appliquer une fonction de dérivation au nombre aléatoire Rand obtenu à l'étape 303. Selon un exemple, la fonction de dérivation est une fonction adaptée à fournir une nouvelle donnée secrète à partir d'une première donnée secrète, comme un nouveau nombre aléatoire à partir d'un premier nombre aléatoire. Selon un exemple, la fonction de dérivation est une fonction pseudo-aléatoire. La plateforme fournit donc un nombre aléatoire dérivé Rand2 à partir du nombre aléatoire Rand déchiffré obtenu précédemment. En pratique, chaque dispositif électronique mettant en oeuvre le procédé d'initialisation 300 comprend une fonction de dérivation adaptée à fournir un nombre aléatoire différent des nombres aléatoires fournis par des fonctions de dérivation d'autres dispositifs. Ainsi, selon un exemple, la fonction de dérivation est une fonction physiquement inclonable (PUF, Physically Unclonable Function) .

A une étape 305 (Storage), successive à l'étape 304, la plateforme stocke le nombre aléatoire dérivé Rand2 dans une partie d'une mémoire du dispositif qui n'est accessible qu'à la plateforme. Ce nombre aléatoire dérivé Rand2 sert à vérifier la concordance entre un nombre aléatoire extrait du code d'exécution d'une première application et celui d'une deuxième application ayant déjà été reçu par la plateforme. Un avantage d'utiliser un nombre aléatoire est qu'il constitue une donnée dont la valeur est quasiment unique et qui est difficile à retrouver par des moyens cryptographiques.

Le nombre aléatoire Rand n'est connu que par le dispositif mettant en oeuvre le procédé 300, et n'est jamais stocké déchiffré pendant la mise en oeuvre des étapes 301 à 304. Le nombre aléatoire dérivé Rand2 peut, quant à lui, être partagé à d'autres dispositifs, par exemple directement ou alors de manière chiffrée.

A l'étape 303, successive à l'étape 301, le code d'exécution chiffré de l'application est déchiffré et/ou authentifié. Selon un mode de réalisation, le code d'exécution est déchiffré, par la plateforme, en utilisant une clé de déchiffrement qui n'est connue que des fabricants de l'application et de la plateforme, ou dispositif mettant en oeuvre la plateforme. En particulier, la clé de déchiffrement n'est pas connue d'autres fabricants d'applications.

A une étape 306 (Storage), le code d'exécution déchiffré de l'application est stocké, par la plateforme, dans une partie d'une mémoire qui n'est accessible qu'aux fabricants de l'application et de la plateforme, ou dispositif mettant en oeuvre la plateforme. En particulier, la partie de mémoire n'est pas connue d'autres fabricants d'applications.

Les étapes 302 à 306 sont mises en oeuvre pour chaque application comprises dans le système.

La figure 4 comprend deux schémas bloc (A) et (B) illustrant des modes de mise en oeuvre d'un procédé de stockage 400 de ressources numériques et d'un procédé de récupération 450 de ressources numériques. Ces procédés sont adaptés à être mis en oeuvre par un dispositif électronique du type du dispositif électronique 100 décrit en relation avec la figure 1 mettant en oeuvre un système du type du système 200 décrit en relation avec la figure 2.

Les procédés 400 et 450 sont nécessairement mis en oeuvre après la mise en oeuvre du procédé 300 décrit en relation avec la figure 3. Ainsi, les nombres aléatoires d'identification de chaque application du système ont déjà été dérivés et stockés par la plateforme logicielle partagée. Autrement dit, le nombre aléatoire dérivé Rand2 de la figure 3 a déjà été stocké par la plateforme logicielle partagée, par exemple dans une mémoire volatile par une étape du type de l'étape 305 décrite en relation avec la figure 3. Selon une variante de réalisation, le nombre aléatoire dérivé Rand2 de la figure 3 peut être stocké dans une mémoire non volatile, cela a pour avantage de gagner du temps à chaque démarrage et d'éviter une opération de déchiffrement qui peut être couteuse en temps.

A une étape 401 (Asset), une application du type d'une des applications 202 décrites en relation avec la figure 2 souhaite stocker en mémoire des ressources numériques. Selon un exemple, les ressources numériques concernées sont des données sensibles et/ou secrètes fournies à l'application par des moyens externes, ou des données sensibles et/ou secrètes générées par l'application.

A une étape 402 (Send), successive à l'étape 401, l'application envoie les ressources numériques à stocker à la plateforme. Selon un exemple, la plateforme peut chiffrer les ressources numériques en utilisant le nombre aléatoire dérivé associé à l'application comme clé de chiffrement. Selon un autre exemple, la plateforme peut signer les ressources numériques en utilisant le nombre aléatoire dérivé.

A une étape 403 (Store), successive à l'étape 402, la plateforme stocke les ressources numériques dans une partie d'une mémoire associé au nombre aléatoire dérivé, c'est-à-dire le nombre aléatoire Rand2 de la figure 3. Selon un exemple, ladite partie de mémoire n'est accessible qu'à la plateforme logicielle partagée. Selon une variante, ladite partie de mémoire n'est accessible qu'à la plateforme logicielle partagée et au fabricant de ladite application.

A une étape 451 (Want Access), une application du type d'une des applications 202 décrites en relation avec la figure 2 souhaite avoir accès à des ressources numériques stockées en mémoire, par exemple pour pouvoir mettre en oeuvre certaines de ses fonctionnalités.

A une étape 452 (Req), successive à l'étape 451, l'application envoie une requête à la plateforme logicielle partagée, indiquant qu'elle souhaite récupérer les ressources numériques associées à son nombre aléatoire.

A une étape 453 (Verif), successive à l'étape 452, la plateforme vérifie la concordance entre le nombre aléatoire dérivé de l'application ayant formulé la requête et les nombres aléatoires dérivés qu'elle a stockés dans une partie de mémoire. Pour cela, la plateforme utilise le nombre aléatoire dérivé de ladite application, du type du nombre aléatoire rand2 de la figure 3. Selon un premier exemple, le nombre aléatoire dérivé peut être simplement comparé à tous les nombres aléatoires dérivés stockés par la plateforme. Selon un deuxième exemple, le nombre aléatoire dérivé reçu peut être comparé au nombre aléatoire associé aux ressources numériques et/ou à la partie de mémoire stockant des ressources numériques auxquelles l'application demande accès. Selon un troisième exemple, si le nombre aléatoire dérivé est utilisé pour signer ou pour chiffrer des ressources numériques, alors le nombre aléatoire reçu est utilisé pour vérifier si c'est bien celui qui a été utilisé pour signer ou chiffrer les ressources numériques. Deux des trois ou les trois exemples cités précédemment peuvent être mis en oeuvre successivement ou simultanément à l'étape 453. Si l'étape 453 résulte en un succès (sortie Y de l'étape 453), une étape 454 (Access) est mise en oeuvre, sinon (sortie N de l'étape 453) l'étape 455 est mise en oeuvre.

A l'étape 454, la plateforme a trouvé des ressources numériques associées au nombre aléatoire de ladite application. La plateforme fournit ces ressources à l'application.

A l'étape 455, la plateforme n'a pas trouvé de ressource numérique associée au nombre aléatoire de ladite application. La plateforme ne fournit donc pas de ressource à l'application. Selon un exemple, la plateforme peut fournir une donnée d'erreur à l'application.

Selon un exemple, une application peut changer de nombre aléatoire pendant une mise à jour de son code d'exécution. Cela permet à la plateforme de ne pas fournir de ressource numérique stockée par une version antérieure d'une application à une nouvelle version de cette application. Selon un exemple précis, cela permet à la plateforme de déjouer une attaque par substitution d'application.

De plus, selon un exemple, si une plateforme détecte qu'une application associée à un premier nombre aléatoire a changé de nombre aléatoire pour un deuxième nombre aléatoire, une possibilité de supprimer les ressources numériques stockées peut être envisagée. De même, selon un exemple, si une plateforme détecte qu'une application associée à un premier nombre aléatoire a changé de nombre aléatoire pour un deuxième nombre aléatoire, la nouvelle version de l'application peut être désinstallée et une ancienne version, plus sure, peut être réinstallée.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Système (200) comprenant au moins une première application (202) et une plateforme (201) logicielle partagée, dans lequel chaque application (202) est identifiée par ladite plateforme (201) logicielle par un premier nombre aléatoire, ledit premier nombre aléatoire étant stocké de manière chiffrée dans un code d'exécution de ladite première application (202), et un deuxième nombre représentatif dudit premier nombre aléatoire étant stocké dans une première partie d'une mémoire uniquement accessible à ladite plateforme (201).

2. Système selon la revendication 1, dans lequel ledit deuxième nombre représentatif dudit premier nombre aléatoire est généré par ladite plateforme (201) logicielle.

3. Système selon la revendication 1 ou 2, dans lequel ledit premier nombre aléatoire est généré par un premier fabricant d'équipement d'origine de ladite première application (202).

4. Système selon l'une quelconque des revendications 1 à 3, dans lequel ledit premier nombre aléatoire est modifié lors d'une mise-à-jour de ladite première application (202).

5. Système selon l'une quelconque des revendications 1 à 4, dans lequel ledit code d'exécution de ladite première application (202) est stocké dans une deuxième partie d'une mémoire qui n'est pas accessible à un deuxième fabricant d'équipement d'origine d'une deuxième application (202) mise en oeuvre par ladite plateforme (201).

6. Système selon l'une quelconque des revendications 1 à 5, étant un système d'exploitation sécurisé embarqué dans un élément sécurisé.

7. Procédé d'initialisation (300) d'un système selon l'une quelconque des revendications 1 à 6, comprenant les étapes successives suivantes :
- envoyer, par ladite première application (202), ledit code d'exécution chiffré à ladite plateforme (201) ;
- extraire, par ladite plateforme (201), ledit premier nombre aléatoire ;
- générer, par ladite plateforme (201), ledit deuxième nombre ; et
- stocker ledit deuxième nombre.

8. Procédé selon la revendication 7, comprenant, en outre, les étapes successives suivantes :
- déchiffrer, par ladite plateforme (201), ledit code d'exécution chiffré avec une première clé de déchiffrement ; et
- stocker ledit code d'exécution déchiffré.

9. Procédé selon la revendication 8 dans son rattachement à la revendication 5, dans lequel ledit code d'exécution déchiffré est stocké dans ladite deuxième partie de mémoire.

10. Procédé selon la revendication 8 ou 9 dans son rattachement à la revendication 5, dans lequel ladite clé n'est pas connue dudit deuxième fabricant d'équipement d'origine.

11. Procédé de stockage (400) d'au moins une première ressource numérique de ladite première application (202) du système selon l'une quelconque des revendications 1 à 6, dans lequel ladite plateforme (201) stocke ladite au moins une ressource numérique et l'associe audit deuxième nombre.

12. Procédé selon la revendication 11, dans lequel la plateforme (201) utilise ledit deuxième nombre pour signer et/ou chiffrer ladite au moins une première ressource numérique.

13. Procédé selon la revendication 11 ou 12, dans lequel ladite au moins une première ressource numérique est stockée dans une troisième partie d'une mémoire.

14. Procédé de récupération (450) d'au moins une deuxième ressource numérique associé à un troisième nombre par une troisième application (202) identifiée par un quatrième nombre aléatoire, mis en oeuvre par le système selon l'une quelconque des revendications 1 à 6, dans lequel ladite plateforme (201) vérifie la concordance desdits troisième et quatrième nombres.

15. Procédé selon la revendication 14, dans lequel si la concordance est vérifiée, ladite au moins une deuxième ressource est transmise à ladite troisième application (202) par ladite plateforme (201).

16. Procédé selon la revendication 14 ou 15, dans lequel si la concordance n'est pas vérifiée, une erreur est transmise à ladite troisième application (202) par ladite plateforme (201).
